# EUROPÄISCHE PATENTSCHRIFT

(11) **EP 3 011 888 B1**
(45) Veröffentlichungstag und Bekanntmachung des Hinweises auf die Patenterteilung: **15.01.2020**
(21) Anmeldenummer: 15179921.0
(22) Anmeldetag: 06.08.2015
(51) Int. Cl.: A47L 15/42, F16K 11/00

(54) **GESCHIRRSPÜLMASCHINE**
DISHWASHER
LAVE-VAISSELLE

(30) Priorität: 21.10.2014 DE 102014115300
(43) Veröffentlichungstag der Anmeldung: 27.04.2016
(73) Patentinhaber: WINTERHALTER GASTRONOM GMBH, 88074 Meckenbeuren (DE)
(72) Erfinder: Geser, Bernd, 88142 Wasserburg (DE)
(74) Vertreter: Appelt, Christian W.

(56) Entgegenhaltungen:
- EP-A1- 1 046 369
- DE-A1-102010 053 051
- DE-A1-102011 083 302

## Beschreibung

Die vorliegende Erfindung bezieht sich auf eine Geschirrspülmaschine mit einer Ventileinrichtung und insbesondere auf eine Geschirrspülmaschine, wobei die Ventileinrichtung eine Rückflussverhinderung bei der Ableitung eines Konzentrats aufweist.

### Hintergrund

In Geschirrspülmaschinen kommen häufig Wasseraufbereitungsanlagen wie beispielsweise Umkehrosmoseanlagen zum Einsatz, um Rohwasser vor dem Gebrauch in der Spülmaschine bzw. einem Aufheizen in einem Boiler aufzuarbeiten. Die Umkehrosmoseanlagen weisen eine Membrane auf und nutzen eine Umkehrung des osmotischen Prinzips, um das Rohwasser in ein Retentat (Konzentrat), welches nicht die Membran passiert hat, und ein Permeat, das die Membran passiert hat, zu trennen. Das Konzentrat wird zusammen mit einem Abwasser der Spülmaschine einem bauseitigen Abwasseranschluss zugeführt.

Aus der DE 10 2010 053 051 A1 ist beispielsweise eine Spülmaschine mit einer UmkehrOsmose-Anlage bekannt. Ferner ist beispielsweise aus der DE 199 18 337 A1 ein Zweiwegeventil für ein Flüssigkeit führendes Haushaltsgerät bekannt. Aus der DE 10 2011 083 302 A1 ist schließlich ein Schaltventil bekannt, das einen Ventilraum aufweist, wobei ein Eingang unten an dem Ventilraum angeordnet ist, während zwei Ausgänge nebeneinander und oben an dem Ventilraum angeordnet sind, wobei eine magnetische Betätigungsvorrichtung vorgesehen ist, die einen magnetischen Ventilschließkörper anziehen und damit seine Position beeinflussen kann.

Bei bestimmten Gesamtsystemen besteht die Gefahr, dass bei hochverlegtem bauseitigem Abwasseranschluss das Konzentrat der Umkehrosmoseanlage nicht in den Abwasseranschluss befördert wird, sondern dass es zurück in den Spülraum der Spülmaschine oder in einen Tank gedrückt werden kann. Dieser Effekt kann verhindert werden, wenn verschiedene elektrisch- oder mechanisch-betätigte Ventile genutzt werden, um die entsprechenden Leitungen zu öffnen oder zu schließen, so dass beispielsweise das Konzentrat lediglich dem Abwasseranschluss zuführbar ist, nicht jedoch dem Spülraum der Spülmaschine. Dazu können beispielsweise folgende Ventiltypen genutzt werden: ein Kugelhahnventil, ein Magnetventil und/oder ein Rückschlagventil, wobei diese Ventile je nach Bauausführung mechanisch oder elektrisch steuerbar sind.

Ein weiteres Problem von konventionellen Anlagen ergibt sich daraus, dass das Abwasser der Spülmaschine häufig eine Konsistenz aufweist, die schnell zu einem Verkleben von Ventilen führt, so dass eine erhöhte mechanische oder elektrische Aktuatorleistung erforderlich ist, um die entsprechenden Ventile zuverlässig zu betätigen.

Daher besteht ein Bedarf nach Alternativlösungen, die einerseits ein Verkleben im Inneren eines Ventils in einer Geschirrspülmaschine verhindert und andererseits zuverlässig einen Rückfluss in den Spülraum hinein verhindert.

### Zusammenfassung der Erfindung

Diese Aufgabe wird durch eine Geschirrspülmaschine nach Anspruch 1 gelöst.

Die vorliegende Erfindung bezieht sich auf eine Geschirrspülmaschine mit einer Ventileinrichtung, die Folgendes aufweist: eine Kugel; ein Gehäuse, einen ersten, zweiten und dritten Anschluss; eine Dichtung und eine Auflagestruktur. Das Gehäuse umfasst einen Innenraum, der eine vertikale Bewegung der Kugel zwischen einer ersten Position und einer zweiten Position ermöglicht. Der erste Anschluss und der zweite Anschluss sind vertikal gegenüberliegend in dem Gehäuse ausgebildet, so dass die Kugel sich in der ersten Position an dem ersten Anschluss befindet und sich in der zweiten Position an dem zweiten Anschluss befindet. Der dritte Anschluss steht mit dem Innenraum vertikal zwischen dem ersten Anschluss und dem zweiten Anschluss in Verbindung. Somit ist der dritte Anschluss sowohl in der ersten Position als auch in der zweiten Position offen. Die Dichtung ist an dem ersten Anschluss derart ausgebildet, dass die Kugel in der ersten Position den ersten Anschluss abdichtet. Die Auflagestruktur (oder Abstützstruktur) ist an dem zweiten Anschluss derart ausgebildet, dass die Kugel in der zweiten Position auf der Auflagestruktur liegt, ohne den zweiten Anschluss abzudichten.

Die oben genannte Aufgabe wird somit von dem Erfindungsgegenstand dadurch gelöst, dass innerhalb des Gehäuses der Ventileinrichtung die Kugel beweglich ist, und zwar in der Art, dass sie in einer Position einen Anschluss abdichtet, während sie in einer zweiten Position lediglich auf der Auflagestruktur aufliegt und somit ein Verkleben auf der Auflagestruktur unterdrückt wird.

Eine Dichtung gemäß der vorliegenden Erfindung umfasst alle Mittel, die geeignet sind, um einen Fluidstrom (z.B. von Wasser), der die Ventileinrichtung in eine bestimmte Rich-tung passiert, zu verhindern.

Bei weiteren Ausführungsbeispielen ist der erste Anschluss vertikal oben angeordnet und der zweite Anschluss vertikal unten angeordnet, so dass im drucklosen Betrieb die Kugel auf der Abstützstruktur lagert. Wenn beispielsweise über den zweiten Anschluss Abwasser (oder das Konzentrat) zugeführt wird, und die Kugel hin zur oberen Position gedrückt wird, erfolgt einer Abdichtung an der oberen Endlage. Somit kann das Konzentrat nicht über den ersten Anschluss weitergeleitet werden und wird stattdessen dem Abwasseranschluss zugeführt.

Die vertikale Richtung bezieht sich auf eine betriebsbereit aufgestellte Spülmaschine und ist entgegen der Wirkungsrichtung der Schwerkraft, die auf die Kugel in der Ventileinrichtung wirkt, gerichtet. Dementsprechend spannen die horizontalen Richtungen eine Querschnittsebene senkrecht zur vertikalen Richtung auf.

Die Lagerung auf der Auflagestruktur ist dabei derart gewählt, dass die Kugel an möglichst wenigen Punkten oder an einer möglichst geringen Fläche mit der Auflagestruktur in Kontakt gerät, so dass ein Verkleben verhindert wird. Dabei kann die Auflagestruktur derart gebildet sein, dass keine flächenartige Berührung mit der Kugel möglich ist. Andererseits sollten die Auflagepunkte der Auflagestruktur so gebildet sein, dass sie die Kugel selbst beim Aufliegen nicht beschädigen wird (beispielsweise über scharfe Kanten oder Spitzen). Daher weisen weitere Ausführungsbeispiele der Geschirrspülmaschine eine Auflagestruktur auf, die die Kugel nur an getrennten Punkten oder entlang von separaten Linien halten, um so das Verkleben der Kugeln an der Auflagestruktur zu verhindern. Beispielsweise kontaktiert die Kugel die Auflagestruktur an höchstens 3 oder höchstens 5 oder höchstens 10 Punkten und/oder Linien.

Gemäß der Erfindung weist das Gehäuse mehrere Rippen (oder zumindest eine Rippe) auf, die als Führung innerhalb des Gehäuseinnenraumes dienen. Die Rippen können sich vertikal erstrecken, um so die Kugel zwischen der ersten Position und der zweiten Position zu führen. Gleichzeitig können die mehreren Rippen einen Flüssigkeitsstrom an der Kugel vorbei erlauben, so dass, wenn die Kugel an der zweiten (unteren) Position sich befindet, der Flüssigkeitsstrom über den ersten Anschluss hin zum dritten Anschluss möglichst ungehindert fließen kann. Um ein Verkleben oder Verstopfen zu verhindern, sollte ein möglichst großer Querschnitt für den Flüssigkeitsstrom bereitgestellt werden.

Bei weiteren Ausführungsbeispielen weist die Kugel eine höhere Dichte als Wasser auf. Alternativ kann die Kugel auch eine geringere Dichte oder eine gleiche Dichte wie Wasser aufweisen. Das führt dazu, dass die Kugel in einem drucklosen Betrieb, während die Ventileinrichtung noch mit Flüssigkeit gefüllt sein kann, die Kugel sich entweder in der ersten Position oder in der zweiten Position befindet. Welche der Möglichkeiten genutzt wird, kann in Abhängigkeit davon ausgewählt werden, durch welchen Anschluss (ersten oder zweiten Anschluss) eine möglichst ungehinderte oder schnelle Ableitung ermöglicht werden soll.

Bei weiteren Ausführungsbeispielen ist der dritte Anschluss der Ventileinrichtung ausgebildet, um einen fluiden Strom vertikal nach unten zu richten. Diese Ausgestaltung bietet den Vorteil, dass das ausströmende Abwasser, beispielsweise von dem Spülraum, keine Richtungsänderung in der Ventileinrichtung ausführt. Somit können große Mengen des Abwassers in kurzer Zeit durch die Ventileinrichtung hindurchgeleitet werden, ohne dass unnötige Verwirbelungen in dem Ventilinnenraum entstehen. Somit wird durch diese Ausgestaltung die Geschwindigkeit der Entleerung des Spülraumes erhöht.

Weitere Ausführungsbeispiele beziehen sich ebenfalls auf eine Geschirrspülmaschine mit einem Spülraum und/oder einer Umkehrosmoseanlage und/oder einem Abwasseranschluss. Der Spülraum ist fluid mit dem ersten Anschluss verbindbar, um Abwasser über den ersten Anschluss abzuleiten. Die Umkehrosmoseanlage trennt ein Konzentrat vom Rohwasser und ist fluid mit dem zweiten Anschluss verbindbar, um das Konzentrat von der Umkehrosmoseanlage abzuleiten. Der Abwasseranschluss ist fluid mit dem dritten Anschluss verbindbar, um das Konzentrat der Umkehrosmoseanlage und/oder Abwasser aus dem Spülraum über den Abwasseranschluss zu entsorgen.

Bei weiteren Ausführungsbeispielen weist der Spülraum weiter eine Einlassöffnung auf und/oder der Abwasseranschluss ist oberhalb der Einlassöffnung ausgebildet.

Bei weiteren Ausführungsbeispielen weist der Spülraum weiter einen Auslass auf, und/oder die Geschirrspülmaschine weist eine Entlüftung auf, wobei die Entlüftung bei der Einlassöffnung des Spülraumes angeordnet ist und fluid mit dem ersten Anschluss der Ventileinrichtung und dem Auslass des Spülraumes verbunden ist. Die optionale Entlüftung ist ausgebildet, um das Abwasser aus dem Spülraum zu entlüftet, bevor es dem ersten Anschluss der Ventileinrichtung zugeführt wird.

Bei weiteren Ausführungsbeispielen weist die Geschirrspülmaschine optional eine Abwasserpumpe auf, die ausgebildet ist, um den Spülraum von Schmutzwasser zu entleeren. Die Abwasserpumpe weist optional eine Pumpstärke auf, die ausreichend ist, um das Abwasser über die Ventileinrichtung zu dem Abwasseranschluss zu pumpen, aber kleiner ist als ein Pumpendruck, der erforderlich ist, um die Umkehrosmoseanlage zu betreiben. Damit wird ebenfalls ein Rückpumpen des Schmutzwassers durch die Umkehrosmoseanlage hindurch verhindert.

Vorteile der Ausführungsbeispiele der vorliegenden Erfindung umfassen somit das Verhindern eines Verklebens der Kugel im Inneren der Ventileinrichtung beziehungsweise das Vermeiden von teuren Alternativlösungen. Somit ist eine Geschirrspülmaschine gemäß der vorliegenden Erfindung kostengünstig herstellbar und zuverlässig betreibbar.

### Kurzbeschreibung der Figuren

Die Erfindung wird nachfolgend bezugnehmend auf die beiliegenden Zeichnungen näher beschrieben, wobei:
- Fig. 1: eine Geschirrspülmaschine nach einem Ausführungsbeispiel der vorliegenden Er-findung zeigt;
- Fig. 2: eine Geschirrspülmaschine nach einem weiteren Ausführungsbeispiel der vorlie-genden Erfindung zeigt;
- Figs. 3A, 3B: eine Querschnittsansicht und eine Raumansicht der Ventileinrichtung der Geschirrspülmaschine zeigen; und
- Figs. 4A, 4B: eine Ansicht von unten und eine Seitenansicht der Ventileinrichtung gemäß Ausführungsbeispielen der vorliegenden Erfindung zeigen.

### Detaillierte Beschreibung

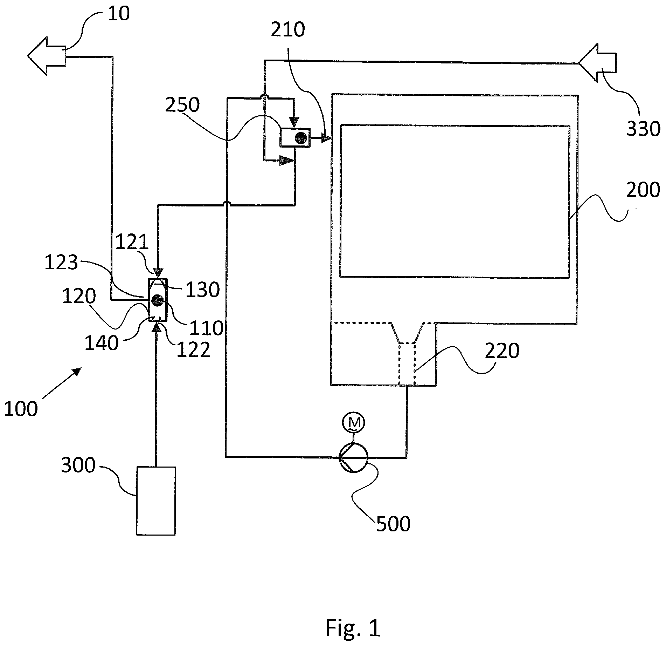

Fig. 1 zeigt eine Geschirrspülmaschine mit einer Ventileinrichtung 100, einem Spülraum 200, einer Umkehrosmoseanlage 300 und einer Schmutzwasserpumpe 500. Die Geschirrspülmaschine ist an einen Abwasseranschluss 10 angeschlossen bzw. anschließbar.

Die Ventileinrichtung 100 weist ein Gehäuse 120, eine Kugel 110, einen ersten Anschluss 121, einen zweiten Anschluss 122 und einen dritten Anschluss 123 auf. Die Kugel 110 ist vertikal zwischen einer ersten Position an dem ersten Anschluss 121 und einer zweiten Position an dem zweiten Anschluss 122 bewegbar. Ferner weist die Ventileinrichtung 100 eine Dichtung 130 auf, die beispielsweise als ein Dichtring ausgebildet sein kann, und den ersten Anschluss in der ersten Position der Kugel 110 abdichtet.

Der dritte Anschluss 123 ist mit dem Abwasseranschluss 10 verbunden. Der zweite Anschluss 122 ist mit einem Konzentratausgang der Umkehrosmoseanlage 300 verbunden. Der erste Anschluss 121 ist mit dem Spülraum 200 über eine Entlüftung 250 verbunden. Entlang der Verbindung zwischen dem ersten Anschluss 121 und der Entlüftung 250 ist optional ein Einlass ausgebildet, um Abwasser 330 einer Wasserenthärtungsanlage (in der Fig. 1 nicht gezeigt) über die Ventileinrichtung 100 dem Abwasseranschluss 10 zu zuführen. Die Entlüftung 250 ist an einem Einlass 210 des Spülraumes 200 angeordnet.

Außerdem weist der Spülraum 200 einen Auslass 220 auf, der mit der Abwasserpumpe 500 verbunden ist. Die Abwasserpumpe 500 pumpt das Abwasser aus dem Spülraum 200 zu der Entlüftung 250. Die Entlüftung 250 ist ausgebildet, um das Abwasser, welches von der Abwasserpumpe 500 aus dem Spülraum 200 über den Auslass 220 herausgepumpt wird, zu entlüften, bevor das Abwasser zu dem ersten Anschluss 121 der Ventileinrichtung 100 gelangt. Die freigesetzte Luft wird beispielsweise in den Spülraum 200 über den Einlass 210 geleitet. Das bietet den Vorteil, dass potentielle Luftblasen im Abwasser nicht die Funktionsweise der Ventileinrichtung 100 behindern können.

Daher wird, wenn die Abwasserpumpe 500 aktiviert wird, das Abwasser aus dem Spülraum 200 abgepumpt und zunächst in der Entlüftung 250 entlüftet und anschließend hin zur Ventileinrichtung 100 gepumpt. Die Kugel 110 wird dabei vertikal nach unten gedrückt und kommt auf der Auflagestruktur 140 zum Liegen. Der dritte Anschluss 123 wird freigegeben, so dass die Abwasserpumpe 500 das Abwasser nach dem Entlüften dem Abwasseranschluss 10 pumpen kann.

In einer zweiten Betriebsart wird das Konzentrat von der Umkehrosmoseanlage über den zweiten Anschluss 122 der Ventileinrichtung 100 zugeführt. Dies führt dazu, dass die Kugel 110 vertikal nach oben gedrückt wird und den ersten Anschluss 121 mittels der Dichtung 130 abdichtet wird, wobei der dritte Anschluss 123 offen ist. Damit wird verhindert, dass das Konzentrat von der Umkehrosmoseanlage hin zur Entlüftung 250 und anschließend in den Spülraum 200 gepumpt werden kann. Stattdessen wird das Konzentrat der Umkehrosmoseanlage 300 über den (offenen) dritten Anschluss 123 dem Abwasseranschluss 10 geleitet.

Wie bereits erwähnt basieren die Umkehrosmoseanlagen, die zur Wasseraufbereitung genutzt werden können, auf einer Umkehrung des Osmose-Effektes. Dabei wird entlang eine Membran in der Umkehrosmoseanlage Rohwasser unter einem vorbestimmten Druck geleitet. Der vorbestimmte Druck ist im Wesentlichen durch den entsprechenden osmotischen Druck gegeben, oder sollte oberhalb des osmotischen Druckes liegen, so dass der Osmose-Effekt umgedreht wird und für die Wasseraufbereitung nutzbar ist. Die Umkehrosmoseanlage separiert somit das Rohwasser in ein Konzentrat, welches abzuleiten ist, und ein Permeat, welches für den Spülvorgang genutzt werden kann. Da die Ventileinrichtung am zweiten Anschluss 122 nicht abdichtet, bedeutet dies, dass die Schmutzwasserpumpe 500 einen Pumpendruck bereitstellen sollte, der nicht den osmotischen Druck zum Betreiben der Umkehrosmoseanlage überschreitet. Ansonsten würde die Gefahr bestehen, dass ein Teil des Abwassers durch Umkehrosmoseanlage "gedrückt" werden würde.

Da bei höher verlegtem Abwasseranschluss 10 Abwasser/Schmutzwasser in der Ventileinrichtung 100 zurück bleiben wird, kann es vorteilhaft sein, wenn die Kugel 110 auf dem Abwasser schwimmt. Das hätte den vorteilhaften Effekt, dass die Kugel 110 den ersten Anschluss in der Ruheposition (ohne strömendes Wasser) abdichtet und somit selbst klei-ner Mengen Konzentrat nicht zum Spülraum 200 gelangen können.

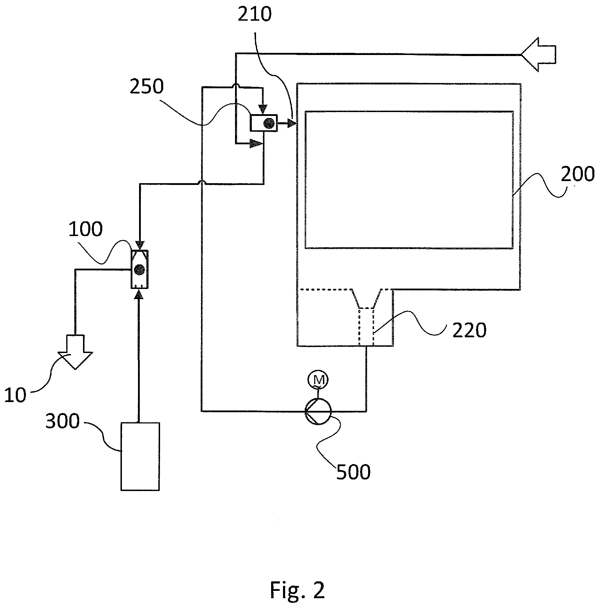

Fig. 2 zeigt eine weiteres Ausführungsbeispiel der vorliegenden Erfindung, welches sich von dem Ausführungsbeispiel der Fig. 1 lediglich dadurch unterscheidet, dass der Abwasseranschluss 10 unterhalb der Einlassöffnung 210 des Spülraumes 200 angeordnet ist. Alle weiteren Elemente der Fig. 2 sind gleich zu den Elementen der Fig. 1. Eine wiederholte Beschreibung ist daher nicht erforderlich.

Ohne darauf beschränkt zu sein, sind Ausführungsbeispiele der vorliegenden Erfindung insbesondere für die Gestaltung, wie sie in der Fig. 1 gezeigt ist, vorteilhaft. In diesen Fällen muss der Druck, mit dem das Konzentrat der Umkehrosmoseanlage 300 gepumpt wird größer sein als ein Druck der erforderlich wäre, um das Konzentrat hin zu der Einlassöffnung 210 zu pumpen. Durch das Abdichten der Kugel 110 mit der Dichtung 130 wird jedoch ein solcher Rückfluss zuverlässig verhindert.

Jedoch weisen Ausführungsbeispiele auch für die Geschirrspülmaschine der Fig. 2 Vorteile auf, die in herkömmlichen Anlagen nicht vorhanden sind. So sind die Pumpen bei Umkehrosmoseanlagen bautechnisch in der Regel kräftig genug, um das Wasser in den Spülraum 200 zu pumpen. Sie müssen auch ausreichend stark ausgebildet sein, um den Umkehrosmose-Effekt in Gang zu setzen. Somit kann es auch bei tiefer liegenden Abwasseranschluss 10 potentiell zu einem Rückstau kommen. Ohne die Ventileinrichtung 100 kann dies dazu führen, dass zumindest zu Beginn der Konzentrat-Ableitung ein Teil des Konzentrats in den Spülraum gelangt.

Ventileinrichtungen der vorliegenden Erfindung bieten somit einen zusätzlichen Schutz für Spülmaschinen, die die Umkehrosmose nutzen, und zwar unabhängig davon, in welcher Höhe sich der Abwasseranschluss befindet.

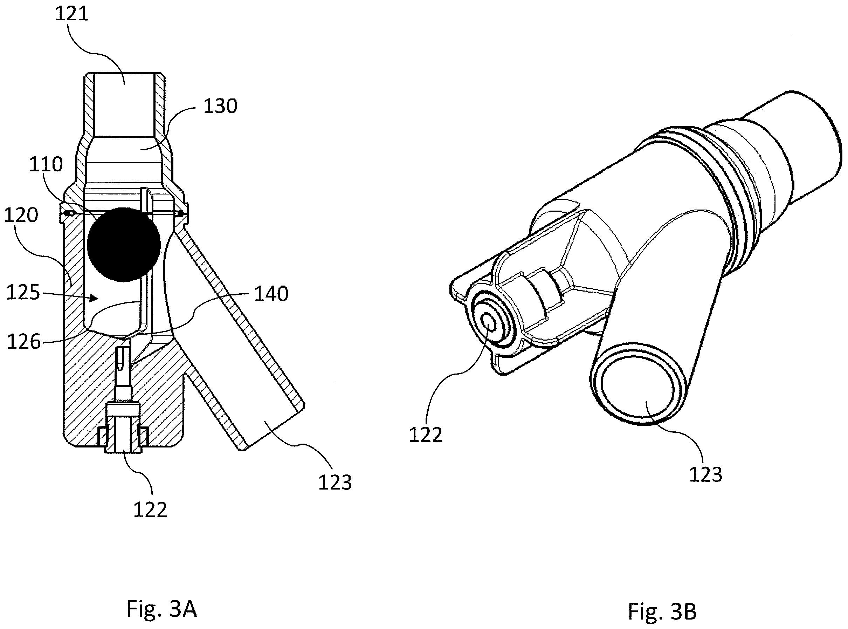

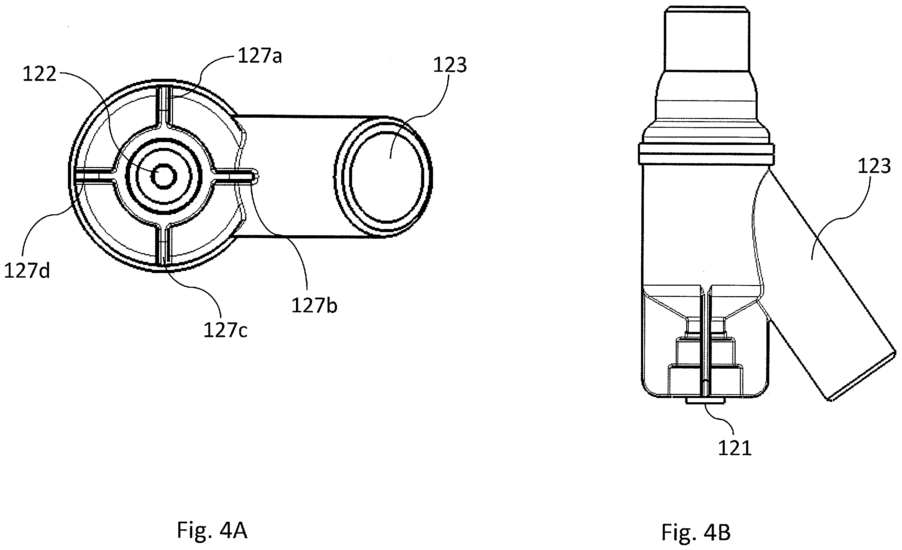

Die Figs. 3 und 4 zeigen die Ventileinrichtung 100 im Detail. Die Figs. 3A und 3B zeigen eine Querschnittsansicht und eine Raumansicht der Ventileinrichtung 100, während die Figs. 4A und 4B Ansicht von unten und eine Seitenansicht der Ventileinrichtung zeigen.

Wie aus der Querschnittsansicht der Fig. 3A ersichtlich ist, weist die Ventileinrichtung einen ersten Anschluss 121 vertikal oben und einen zweiten Anschluss 122 auf, der vertikal gegenüberliegend zu dem ersten Anschluss 121 ist. Außerdem weist die Ventileinrichtung ein Gehäuse 120 auf, welches einen Ventilinnenraum 125 bildet, in welchem die Kugel 110 sich vertikal bewegen kann zwischen einer ersten Position (vertikal oben) und einer zweiten Position (vertikal unten).

Die erste Position wird erreicht, wenn die Kugel 110 durch den Flüssigkeitsdruck von dem zweiten Anschluss 122 vertikal nach oben gegen die Dichtung 130 derart gedrückt wird, dass die Kugel 110 den ersten Anschluss 121 abdichtet. Die zweite Position wird erreicht, wenn die Kugel 110 entweder aufgrund der Schwerkraft nach unten fällt (wenn kein Druck anliegt) oder wenn sie infolge des Flüssigkeitsdruckes, der über den ersten Anschluss 121 in den Ventilinnenraum 125 gelangt, gegen die Auflagestruktur 140 gedrückt wird.

Die Auflagestruktur 140 ist dabei derart ausgebildet, dass keine Abdichtung des zweiten Anschlusses 122 durch die Kugel 110 erfolgt. Vielmehr liegt die Kugel 110 lediglich auf der Auflagestruktur 140. Die Auflagestruktur 140 ist dabei vorteilhafterweise derart ausgebildet, dass sie einerseits die Kugel auf einer möglichst geringen Fläche kontaktiert, um so ein Verkleben der Kugel an der Auflagestruktur 140 zu verhindern, andererseits jedoch nicht zu einer Beschädigung der Kugel führt (beispielsweise über spitze Kanten oder dornartige Vorsprünge).

Das Ausführungsbeispiel, wie es in der Fig. 3A gezeigt ist, weist ferner eine Rippenstruk-tur 126 auf, die entlang einer Innenfläche des Gehäuses 120 ausgebildet ist und eine vertikale Führung für die Kugel 110 bereitstellt. Die Kugel 110 wird somit entlang den Rippen 126 geführt und ermöglicht gleichzeitig einen Flüssigkeitsstrom seitlich an der Kugel 110 vorbei.

Die Rippenstruktur ist jedoch lediglich optional und kann, beispielsweise wenn die Ventileinrichtung 100 entsprechend lang ausgebildet wird, ganz wegfallen, da in einem solchen Fall die Kugel 110 den Flüssigkeitsstrom von dem ersten/zweiten Anschluss hin zu dem dritten Anschluss kaum behindert. Jedoch kann bei kürzer ausgebildeten Ventileinrichtungen beispielsweise ein Teil der Kugel 110 den dritten Anschluss blockieren, so dass ein Ausbilden der Rippenstruktur 126 vorteilhaft ist, um einen möglichst breiten Flüssigkeitsstrom zu gewährleisten.

Fig. 3B zeigt eine Raumansicht der Ventileinrichtung 100, wobei der dritte Anschluss 123 nach unten gerichtet ist und der zweite Anschluss 122 links von dem dritten Anschluss 123 und der erste Anschluss 121 rechts von dem dritten Anschluss 123 angeordnet ist.

Fig. 4A zeigt eine Ansicht der Ventileinrichtung 100 von unten, wobei der dritte Anschluss 123 auf der rechten Seite sichtbar ist und vier Rippen 127a, 127b, 127c und 127d zur Verstärkung des zweiten Anschluss 122 dienen.

Fig. 4B zeigt eine Seitenansicht der Ventileinrichtung 100, wobei der dritte Anschluss 123 sich seitlich nach rechts erstreckt, der zweite Anschluss 122 vertikal unten und der erste Anschluss 121 vertikal nach oben angeordnet ist.

In weiteren Ausführungsbeispielen können zusätzliche Ventile oder Schalteinrichtungen entlang aller oder einem Teil der fluiden Verbindungen ausgebildet sein. Daher bezieht sich der Begriff "verbindbar" in der vorliegenden Beschreibung sowohl auf eine direkte Verbindung als auch auf die Möglichkeit, dass weitere (nicht gezeigte) Komponenten vorhanden und in der Lage sind, eine solche Verbindung erst herzustellen.

Der Erfindungsgegenstand kann auch wie folgt zusammengefasst werden. Die erfinderische Lösung basiert auf einer Ventileinrichtung 100, die drei Anschlüsse, eine Schwimmerkugel und einen Dichtsitz 130 aufweist, wobei der Dichtsitz 130 ausgebildet ist, um einen der drei Anschlüsse 121, 122, 123 in einer Position der Schwimmerkugel 110 zuverlässig abzudichten.

Ausführungsbeispiele der Erfindung beziehen sich auf ein Rückschlagventil (Ventileinrichtung 100) zur Ableitung des Konzentrats einer Spülmaschine mit eingebauter Umkehrosmoseanlage 300. Es kommt für den Wasserabfluss aus der Spülmaschine insbesondere ein 3-Wege-Rückschlagventil 100 zum Einsatz. Das 3-Wege-Rückschlagventil ermöglicht, dass das Konzentrat von einer eingebauten Umkehrosmoseanlage 300 aus der Maschine abgeleitet wird als auch das Abwasser aus der Maschine beziehungsweise ein Regenerat aus einem eingebauten Enthärter dem Abwasser zugeführt wird.

Somit definiert der Erfindungsgegenstand ein spezielles Rückschlagventil (Ventileinrichtung 100), welches einerseits einen Wasserweg in Richtung des Tanks der Spülmaschine versperrt. Andererseits verhindern Ausführungsbeispiele, dass die im Abwasser enthaltenen Feststoffe zu einem Festsitzen oder Verkleben der im Rückschlagventil befindlichen Kugel 110 führen können. Das wird durch die Geometrie des Ventils erreicht, die sicherstellt, dass die Kugel 110 in der unteren Ruhelage nur in einigen Punkten gelagert wird, ohne dabei das Ventil abzudichten. Um eine Abdichtung in Richtung Tank (Spülraum 200 der Spülmaschine) zu gewährleisten, ist die Ventileinrichtung 100 derart angeordnet, dass in der oberen Endlage der Kugel 110 (erste Position) die Ventileinrichtung 100 abdichtet und der Tank an dem ersten Anschluss 121 der Ventileinrichtung 100 angeschlossen ist.

Somit dichtet die Ventileinrichtung 100 von unten nach oben ab (das heißt ein Wasserfluss von unten nach oben wird verhindert) und lässt in entgegengesetzter Richtung das Wasser durch. Dieser Wasserdurchlass in der entgegengesetzten Richtung unterstützt dabei das Nichtverkleben der Kugel 110 an der Auflagestruktur im Sitz. Somit liegt die Kugel 110, wenn kein Wasser fließt, aufgrund der Schwerkraft auf den Auflagepunkten (Auflagestruktur) im unteren Teil des Ventils und kann so nicht im Sitz verkleben.

Der prinzipielle Aufbau solcher Anlagen ist in den Figs. 1 und 2 dargestellt. Die Fig. 1 offenbart ein typisches Problem vieler Installationen, da der Abwasseranschluss 10 geodätisch höher liegt als die Entlüftung der Maschine selbst, was sich bauseitig häufig nicht ändern lässt. Wenn die Ventileinrichtung 100 gemäß der vorliegenden Erfindung nicht vorhanden wäre, würde dies dazu führen, dass das Konzentrat aus der Umkehrosmoseanlage 300 immer über die Entlüftung in den Spülraum 200 zurückfließen würde. Dies wird gemäß der vorliegenden Erfindung durch das 3-Wege-Rückschlagventil jedoch unterbunden, da die Kugel 110 durch die Anströmung des Wassers nach oben in den Dichtsitz 130 gedrückt wird und damit verhindert, dass das Wasser in die Entlüftung 250 gelangt. Ausführungsbeispiele der vorliegenden Erfindung bieten somit die Vorteile, dass sie eine einfache und kostengünstige Lösung darstellen, um ein zuverlässiges Ableiten des Konzentrats der Umkehrosmoseanlage 300 zu ermöglichen, ohne dass es zu einem Verklebung von Ventilen kommen kann, was die Arbeitsweise der Spülmaschine behindern würden.

## Patentansprüche

1. Geschirrspülmaschine mit einer Ventileinrichtung (100), wobei die Ventileinrichtung (100) Folgendes aufweist:
eine Kugel (110);
ein Gehäuse (120) mit einem darin ausgebildeten Innenraum (125), der eine vertikale Bewegung der Kugel (110) zwischen einer ersten Position und einer zweiten Position ermöglicht;
einen ersten Anschluss (121) und einen zweiten Anschluss (122), die vertikal gegenüberliegend in dem Gehäuse (120) ausgebildet sind, so dass die Kugel (110) sich in der ersten Position an dem ersten Anschluss (121) befindet und sich in der zweiten Position an dem zweiten Anschluss (122) befindet; und
eine Dichtung (130), die an dem ersten Anschluss (121) derart ausgebildet ist, dass die Kugel (110) in der ersten Position den ersten Anschluss (121) abdichtet;
eine Auflagestruktur (140), die an dem zweiten Anschluss (122) derart ausgebildet ist, dass die Kugel (110) in der zweiten Position auf der Auflagestruktur (140) liegt, ohne den zweiten Anschluss (122) abzudichten,
**dadurch gekennzeichnet, dass**
die Ventileinrichtung ferner einen dritten Anschluss (123) aufweist, der mit dem Innenraum (125) vertikal zwischen dem ersten Anschluss (121) und dem zweiten Anschluss (122) in Verbindung steht; und
das Gehäuse (120) mindestens eine Rippe oder mehrere Rippen (126) aufweist, die sich vertikal erstrecken, um eine horizontale Bewegung der Kugel (110) zu verhindern und um einen Flüssigkeitsstrom an der Kugel (110) vorbeizuleiten.

2. Geschirrspülmaschine nach Anspruch 1, **dadurch gekennzeichnet, dass** die Auflagestruktur (140) ausgebildet ist, um die Kugel (110) nur an getrennten Punkten oder entlang von separaten Linien zu halten, um so ein Verkleben der Kugel (110) an der Auflagestruktur (140) zu verhindern.

3. Geschirrspülmaschine nach Anspruch 1 oder 2, **dadurch gekennzeichnet, dass** der erste Anschluss (110) vertikal oben angeordnet ist und der zweite Anschluss (122) vertikal unten angeordnet ist, so dass im drucklosen Betrieb die Kugel (110) auf der Auflagestruktur (140) lagert.

4. Geschirrspülmaschine nach einem der vorhergehenden Ansprüche, **dadurch gekennzeichnet, dass** die Kugel (110) eine geringere Dichte als Wasser aufweist.

5. Geschirrspülmaschine nach einem der vorhergehenden Ansprüche, **dadurch gekennzeichnet, dass** die Geschirrspülmaschine weiter Folgendes aufweist:
Mittel zum Bereitstellen von Rohwasser;
einen Spülraum (200), der fluid mit dem ersten Anschluss (121) verbindbar ist, um Abwasser über den ersten Anschluss (121) abzuleiten;
eine Umkehrosmoseanlage (300) zur Trennung eines Konzentrats vom Rohwasser, wobei die Umkehrosmoseanlage (300) fluid mit dem zweiten Anschluss (122) verbindbar ist, um das Konzentrat von der Umkehrosmoseanlage (300) abzuleiten; und
einen Abwasseranschluss (10), der fluid mit dem dritten Anschluss (123) verbindbar ist, um das Konzentrat der Umkehrosmoseanlage (300) und/oder Abwasser aus dem Spülraum (200) über den Abwasseranschluss (10) zu entsorgen.

6. Geschirrspülmaschine nach Anspruch 5, **dadurch gekennzeichnet, dass** der Spülraum (200) weiter eine Einlassöffnung (210) aufweist und der Abwasseranschluss (10) vertikal oberhalb der Einlassöffnung (210) ausgebildet ist.

7. Geschirrspülmaschine nach Anspruch 6, **dadurch gekennzeichnet, dass** der Spülraum (200) weiter einen Auslass (220) aufweist und die Geschirrspülmaschine weiter eine Entlüftung (250) aufweist, wobei die Entlüftung (250) bei der Einlassöffnung (210) des Spülraumes (200) angeordnet ist und fluid mit dem ersten Anschluss (121) der Ventileinrichtung (100) und dem Auslass (220) des Spülraumes (200) verbindbar ist, und die Entlüftung (250) ausgebildet ist, um das Abwasser aus dem Spülraum (200) zu entlüften, bevor es dem ersten Anschluss (121) der Ventileinrichtung (100) zugeführt wird.

8. Geschirrspülmaschine nach einem der Ansprüche 5 bis 7, **dadurch gekennzeichnet, dass** diese weiter eine Abwasserpumpe (500) aufweist, die ausgebildet ist, um den Spülraum (200) von Schmutzwasser zu entleeren, wobei die Abwasserpumpe (500) eine Pumpstärke aufweist, die ausreichend ist, um das Abwasser über die Ventileinrichtung (100) zu dem Abwasseranschluss (10) zu pumpen, aber kleiner ist als ein Pumpendruck, der erforderlich ist, um die Umkehrosmoseanlage (300) zu betreiben.

## Claims

1. Dishwasher with a valve device (100), wherein the valve device (100) comprises the following:
a ball (110);
a housing (120) having an interior (125) designed therein, which allows a vertical movement of the ball (110) between a first position and a second position;
a first port (121) and a second port (122), which are designed vertically opposite in the housing (120) so that the ball (110) is located at the first port (121) in the first position and is located at the second port (122) in the second position; and
a seal (130) which is designed on the first port (121) in such a way that the ball (110) seals the first port (121) in the first position;
a support structure (140) which is designed at the second port (122) in such a way that the ball (110) contacts the support structure (140) in the second position without sealing the second port (122),
**characterized in that**
the valve device additionally has a third port (123), which connects to the interior (125) vertically between the first port (121) and the second port (122); and
the housing (120) has at least one rib or multiple ribs (126), which extend vertically in order to prevent a horizontal movement of the ball (110) and to bypass a fluid flow past the ball (110).

2. Dishwasher according to claim 1, **characterized in that** the support structure (140) is designed to hold the ball (110) only at discrete points or along separated lines in order to prevent the ball (110) from adhering to the support structure (140).

3. Dishwasher according to claim 1 or 2, **characterized in that** the first port (110) is arranged vertically above and the second port (122) is arranged vertically below, so that in unpressurized operation, the ball (110) rests on the support structure (140).

4. Dishwasher according to any one of the preceding claims, **characterized in that** the ball (110) has a lower density than water.

5. Dishwasher according to any one of the preceding claims, **characterized in that** the dishwasher furthermore has the following:
means for providing raw water;
a washing chamber (200), which is fluidly connectable to the first port (121) in order to discharge wastewater via the first port (121);
a reverse osmosis system (300) for separating a concentrate from the raw water, wherein the reverse osmosis system (300) is fluidly connectable to the second port (122) in order to discharge the concentrate from the reverse osmosis system (300); and
a wastewater port (10) which is fluidly connectable to the third port (123) in order to remove concentrate from the reverse osmosis system (300) and/or wastewater from the washing chamber (200) via the wastewater port (10).

6. Dishwasher according to claim 5, **characterized in that** the washing chamber (200) additionally has an inlet opening (210) and the wastewater port (10) is designed vertically above the inlet opening (210).

7. Dishwasher according to claim 6, **characterized in that** the washing chamber (200) additionally has an outlet (220) and the dishwasher additionally has a vent (250), wherein the vent (250) is arranged at the inlet opening (210) of the washing chamber (200) and is fluidly connectable to the first port (121) of the valve device (100) and to the outlet (220) of the washing chamber (200), and the vent (250) is designed to vent wastewater from the washing chamber (200) before the wastewater is supplied to the first port (121) of the valve device (100).

8. Dishwasher according to any one of claims 5 to 7, **characterized in that** it additionally has a wastewater pump (500), which is designed to empty dirty water from the washing chamber (200), wherein the wastewater pump (500) has a pumping power sufficient to pump the wastewater to the wastewater port (10) via the valve device (100), but is less than a pump pressure which is necessary to operate the reverse osmosis system (300).

## Revendications

1. Lave-vaisselle avec un dispositif à soupape (100), le dispositif à soupape (100) comprenant ce qui suit :
une bille (110) ;
un boîtier (120) avec un espace interne (125) réalisé à l'intérieur, qui permet un mouvement vertical de la bille (110) entre une première position et une deuxième position ;
un premier raccordement (121) et un deuxième raccordement (122), qui sont conçus de manière opposée verticalement dans le boîtier (120), de façon à ce que la bille (110) se trouve dans la première position au niveau du premier raccordement (121) et se trouve dans la deuxième position au niveau du deuxième raccordement (122) ;
un joint d'étanchéité (130), qui est disposé au niveau du premier raccordement (121) de façon à ce que, dans la première position, la bille (110) étanchéifie le premier raccordement (121) ;
une structure d'appui (140) qui est disposée au niveau du deuxième raccordement (122) de façon à ce que, dans la deuxième position, la bille (110) s'appuie contre la structure d'appui (140) sans étanchéifier le deuxième raccordement (122),
**caractérisé en ce que** le dispositif à soupape comprend en outre un troisième raccordement (123) qui est relié avec l'espace interne (125) de manière verticale entre le premier raccordement (121) et le deuxième raccordement (122) ; et
le boîtier (120) comprend au moins une ou plusieurs nervures (126) qui s'étendent verticalement afin d'empêcher un mouvement horizontal de la bille (110) et de guider un flux de liquide le long de la bille (110).

2. Lave-vaisselle selon la revendication 1, **caractérisé en ce que** la structure d'appui (140) est conçue pour maintenir la bille (110) uniquement au niveau de points séparés ou le long de lignes séparées, afin d'empêcher ainsi une adhérence de la bille (110) sur la structure d'appui (140).

3. Lave-vaisselle selon la revendication 1 ou 2, **caractérisé en ce que** le premier raccordement (110) est disposé verticalement vers le haut et le deuxième raccordement (122) est disposé verticalement vers le bas, de façon à ce que, en fonctionnement hors pression, la bille (110) repose sur la structure d'appui (140).

4. Lave-vaisselle selon l'une des revendications précédentes, **caractérisé en ce que** la bille (110) présente une densité inférieure à celle de l'eau.

5. Lave-vaisselle selon l'une des revendications précédentes, **caractérisé en ce que** le lave-vaisselle comprend en outre ce qui suit :
des moyens pour la préparation d'eau brute ;
un espace de lavage (200) qui peut être relié de manière fluide avec le premier raccordement (121) afin d'évacuer les eaux usées par l'intermédiaire du premier raccordement (121) ;
une installation d'osmose inverse (300) pour la séparation d'un concentré d'eau brute, l'installation d'osmose inverse (300) pouvant être reliée de manière fluide avec le deuxième raccordement (122) afin d'évacuer le concentré hors de l'installation d'osmose inverse (300) ; et
un raccordement d'eaux usées (10) qui peut être relié de manière fluide avec le troisième raccordement (123) afin d'évacuer le concentré de l'installation d'osmose inverse (300) et/ou les eaux usées hors de l'espace de lavage (200) par l'intermédiaire du raccordement des eaux usées (10).

6. Lave-vaisselle selon la revendication 5, **caractérisé en ce que** l'espace de lavage (200) comprend en outre une ouverture d'entrée (210) et le raccordement des eaux usées (10) est réalisé verticalement au-dessus de l'ouverture d'entrée (210).

7. Lave-vaisselle selon la revendication 6, **caractérisé en ce que** l'espace de lavage (200) comprend en outre une sortie (220) et le lave-vaisselle comprend en outre une ventilation (250), la ventilation (250) étant disposée près de l'ouverture d'entrée (210) de l'espace de lavage (200) et pouvant être reliée de manière fluide avec le premier raccordement (121) du dispositif à soupape (100) et la sortie (220) de l'espace de lavage (200), et la ventilation (250) étant conçue pour ventiler les eaux usées hors de l'espace de lavage (200) avant qu'elles ne soient introduites dans le premier raccordement (121) du dispositif à soupape (100).

8. Lave-vaisselle selon l'une des revendications 5 à 7, **caractérisé en ce que** celui-ci comprend en outre une pompe à eaux usées (500) qui est conçue pour vider l'espace de lavage (200) de l'eau sale, la pompe à eaux usées (500) présentant une puissance de pompage suffisante pour pomper les eaux usées par l'intermédiaire du dispositif à soupape (100) vers le raccordement des eaux usées (10), mais inférieure à une pression de pompage nécessaire pour faire fonctionner l'installation d'osmose inverse (300).
